# EUROPEAN PATENT APPLICATION

(11) **EP 4 420 940 A2**
(43) Date of publication of application: **28.08.2024**
(21) Application number: 24187279.5
(22) Date of filing: 22.12.2022
(51) Int. Cl.: B60T 8/42

(54) **ANTI-LOCK BRAKE APPARATUS, VEHICLE, ELECTRIC VEHICLE AND ELECTRIC-ASSISTED VEHICLE**

(30) Priority: 22.12.2021 CN 202111584723; 22.12.2021 CN 202111593805
(62) Divisional of application: 22215883.4
(71) Applicant: Ling Ji Innovations Tech Co., Ltd., 100192 Beijing (CN); Ninebot (Beijing) Tech Co., Ltd., Beijing 100192 (CN)
(72) Inventor: YUAN, Yubin, Beijing, 100192 (CN); LIN, Zhipeng, Beijing, 100192 (CN); ZHANG, Zhi, Beijing, 100192 (CN); SHAO, Jun, Beijing, 100192 (CN)
(74) Representative: Pfenning, Meinig & Partner mbB

(57) **Abstract**

Embodiments of the present application provide an anti-lock brake apparatus, a vehicle, an electric vehicle and an electric-assisted vehicle. The anti-lock brake apparatus is applied to a brake system, and the brake system is used to provide a brake frictional force for a wheel, the brake system includes a brake oil pipeline, and the anti-lock brake apparatus includes: a volume-adjusting part, the volume-adjusting part has a volume chamber, the volume chamber is connected into the brake oil pipeline, a volume of the volume chamber is continuously adjustable, the volume-adjusting part adjusts the volume of the volume chamber according to a state parameter of the wheel, to enable an oil pressure in the brake oil pipeline to vary, and the brake frictional force exerted on the wheel by the brake system is adjustable. The apparatus has high reliability and high brake efficiency.

## Description

### TECHNICAL FIELD

The present application relates to the technical field of mechanical equipment, and in particular, to an anti-lock apparatus, a vehicle, an electric vehicle and an electric-assisted vehicle.

### BACKGROUND

A brake system is used to brake wheels when a vehicle is driving, so as to realize deceleration of the wheels. For example, the brake system includes a brake oil pump and a caliper, and the brake oil pump clamps the caliper by increasing oil pressure, thereby exerting a large frictional force on the wheels. The brake oil pump relaxes the caliper by reducing the oil pressure, thereby reducing the frictional force exerted on the wheels. In a braking process, if the frictional force exerted by the caliper is too large, the wheels will not rotate, resulting in a phenomenon of locking. At this time, the vehicle can only slide, which will affect driving safety of the vehicle. In order to prevent the wheels from being locked and sliding due to excessive frictional force exerted on the wheels by the brake system, the brake system includes an ABS apparatus (anti-lock brake system, i.e., anti-lock brake apparatus).

Existing ABS apparatus includes a solenoid valve, a high-pressure chamber, a low-pressure chamber, and a caliper, etc. Through actions of the solenoid valve, the caliper frequently switches the connected oil chambers, for example, the high-pressure chamber is connected for a moment, and the low-pressure chamber is connected for another moment, so as to adjust the oil pressure of the caliper, and further to control the frictional force exerted on the wheels. By switching the connected oil chambers in a high frequency, a process similar to point braking is realized to avoid locking. This ABS apparatus has the following problems: multiple solenoid valves lead to a complex structure, and frequent actions of the solenoid valves lead to low reliability and low brake efficiency.

### SUMMARY

The present invention is set out in the appended set of claims. In view of the above problems, embodiments of the present application provide an anti-lock brake apparatus, a vehicle, an electric vehicle and an electric-assisted vehicle, to at least solve the problem of poor effect of existing anti-lock brake apparatuses.

On or more embodiments of the present application provide an anti-lock brake apparatus, which is applied to a brake system, the brake system being used to provide a brake frictional force to a wheel, and the brake system including a brake oil pipeline, where the anti-lock brake apparatus includes: a volume-adjusting part, where the volume-adjusting part has a volume chamber, the volume chamber is connected to the brake oil pipeline, a volume of the volume chamber is continuously adjustable, the volume-adjusting part adjusts the volume of the volume chamber according to a state parameter of the wheel, to enable an oil pressure in the brake oil pipeline to vary, and the brake frictional force exerted on the wheel by the brake system is adjustable.

Optionally, the volume-adjusting part includes: a volume-adjusting shell, which surrounds to form an inner chamber, and is provided with a first through hole and a second through hole at an interval; an adjusting member, which is slidably provided in the inner chamber, and divides the inner chamber into at least two independent chambers, where a chamber between the adjusting member and the first through hole of the volume-adjusting shell is the volume chamber, both the first through hole and the second through hole of the volume-adjusting shell are communicated with the volume chamber, the volume chamber is connected to the brake oil pipeline through the first through hole and the second through hole; and an adjusting unit, which is connected to the adjusting member, and is used to adjust a position of the adjusting member according to the state parameter of the wheel, and further to adjust a volume of the volume chamber connected into the brake oil pipeline.

Optionally, the adjusting unit includes: a drive component connected to the adjusting member; a control component connected to the drive component, where the control component controls the drive component to drive the adjusting member to approach or move away from the first through hole according to the state parameter of the wheel, so as to adjust the volume of the volume chamber connected into the brake oil pipeline.

Optionally, the drive component includes: a power apparatus, which is electrically connected to the control component, and an output shaft of which is connected to the adjusting member, where the control component controls a rotation direction and a rotation speed of the power apparatus according to the state parameter, to drive the adjusting member to approach or move away from the first through hole.

Optionally, the drive component further includes: a transmission mechanism, connected between the power apparatus and the adjusting member, where power output by the power apparatus drives the transmission mechanism, to enable the transmission mechanism to move, and to drive the adjusting member to approach or move away from the first through hole.

Optionally, the drive component further comprises a reducer, and the reducer is connected between the output shaft of the power apparatus and the adjusting member.

Optionally, the transmission mechanism includes a transmission screw rod, the transmission screw rod is connected to the output shaft of the power apparatus, and is in threaded connection with the adjusting member, and drives the adjusting member to approach or move away from the first through hole.

Optionally, the output shaft includes a first shaft section, a second shaft section and a third shaft section, which are sequentially connected along an axial direction, one end of the first shaft section far away from the second shaft section is connected with a rotation component, the second shaft section is provided with a bearing component, and at least part of the third shaft section extends into the adjusting member.

Optionally, a first protrusion is provided on the second shaft section, the first protrusion protrudes outward along a radial direction of the second shaft section, a second protrusion is provided on an inner wall of the volume adjusting shell, the second protrusion protrudes towards the second shaft section, and the bearing component is provided between the first protrusion and the second protrusion.

Optionally, the bearing component includes a thrust bearing for bearing an axial force on the output shaft.

Optionally, one side of the second shaft section close to the adjusting member is sleeved with a sealing ring, and the sealing ring is abutted between an outer circumferential surface of the second shaft section and an inner wall surface of the volume-adjusting shell.

Optionally, an inner hole of the volume-adjusting shell is a stepped hole, the stepped hole includes a first diameter section and a second diameter section, a diameter of the second diameter section is greater than a diameter of the first diameter section, at least part of the sealing ring is provided in the second diameter section, and at least part of the adjusting member is provided in the first diameter section.

Optionally, the adjusting member is provided with a limiting structure, and when the adjusting member moves to a first state, the limiting structure is in contact with the output shaft, to prevent the adjusting member from further moving along a first direction relative to the output shaft.

Optionally, the inner wall surface of the volume-adjusting shell is provided with a first anti-rotation surface, an outer circumferential surface of the adjusting member is provided with a second anti-rotation surface matched with the first anti-rotation surface.

Optionally, a distance from at least one position in a cross section of the volume-adjusting shell corresponding to the first anti-rotation surface to an axis of the transmission screw rod is smaller than a radius of a maximum circumference when a part of the adjusting member provided with the second anti-rotation surface rotates around the axis of the transmission screw rod.

Optionally, the volume chamber is formed between the first through hole and the adjusting member, an oil pipeline screw is connected to the first through hole, and a throttle structure is provided in the oil pipeline screw.

Optionally, the transmission mechanism includes: a first transmission wheel, which is connected to the output shaft of the power apparatus, and is driven by the power apparatus to rotate; a transmission connecting rod, a first end of which is eccentrically hinged on the first transmission wheel, and a second end of which is hinged on the adjusting member, with the first transmission wheel rotating to drive the transmission connecting rod to move and push the adjusting member to move.

Optionally, the transmission mechanism includes a second transmission wheel, the second transmission wheel is eccentrically and rotatably provided in the volume-adjusting shell, and a part of an outer edge of the second transmission wheel is in contact with the adjusting member, and pushes the adjusting member to move.

Optionally, the transmission mechanism includes a transmission cam, and a part of an outer edge of the transmission cam is in contact with the adjusting member, and pushes the adjusting member to move.

Optionally, the transmission mechanism includes a connecting shaft, the adjusting member includes a rotating block and a baffle, the rotating block is hinged to a first end of the baffle through the connecting shaft, a second end of the baffle is abutted against the inner wall of the volume-adjusting shell, the rotating block is rotatably provided in the volume-adjusting shell, and the rotating block and the baffle divide the volume-adjusting shell into two independent chambers, a chamber communicated with the first through hole in the two chambers is the volume chamber, the power apparatus drives the connecting shaft to rotate and thus drive the rotating block to rotate, so as to adjust the volume of the volume chamber.

Optionally, the control component includes: a controller, which is connected with the drive component, and is used to receive state information of the wheel, and the state information includes a wheel speed.

In another aspect of the present application, there is provided a vehicle, which includes wheels, a brake trigger, a brake system and the above anti-lock brake apparatus, where a brake oil pipeline of the brake system is connected to the brake trigger and the wheels, respectively, and the volume chamber of the anti-lock brake apparatus is connected into the brake oil pipeline, so that a continuous and adjustable frictional force is provided for the wheels under control of the brake trigger.

Optionally, the control component further includes: a wheel speed sensor, the wheel speed sensor is connected with the controller, and is provided near the wheels, and the wheel speed sensor is used to detect a wheel speed of the wheels, and to send the wheel speed to the controller.

According to another aspect of the present application, there is provided an electric-assisted vehicle, which includes a wheel, a brake trigger, a brake system and the above anti-lock brake apparatus, where a brake oil pipeline of the brake system is connected to the brake trigger and the wheels, respectively, and the volume chamber of the anti-lock brake apparatus is connected into the brake oil pipeline, so that a continuous and adjustable frictional force is provided for the wheels under control of the brake trigger.

In still another aspect of the present application, there is provided an electric vehicle, which includes wheels, a brake trigger, a brake system and the above anti-lock brake apparatus, where a brake oil pipeline of the brake system is connected to the brake trigger and the wheels, respectively, and the volume chamber of the anti-lock brake apparatus is connected into the brake oil pipeline, so that a continuous and adjustable frictional force is provided for the wheels under control of the brake trigger.

According to the present embodiments, the volume of the volume chamber can be linearly adjusted, which ensures that the frictional force exerted on the wheels is more continuous, and will not reduce to 0 or a very low frictional force, which enables a brake distance to be short, and is beneficial to improving driving safety of the vehicle.

### BRIEF DESCRIPTION OF DRAWINGS

In order to more clearly illustrate the technical solutions in the embodiments of the present application or in the prior art, the following will briefly introduce the drawings that need to be used in the description of the embodiments or the prior art. Obviously, the drawings in the following description are some embodiments of the present application, and for those of ordinary skills in the art, other drawings may be obtained according to these drawings without creative efforts.
FIG. 1 is a schematic diagram of a first state of a first anti-lock brake apparatus according to an embodiment of the present application.
FIG. 2 is a schematic diagram of a second state of the first anti-lock brake apparatus according to an embodiment of the present application.
FIG. 3 is a schematic diagram of a first state of a second anti-lock brake apparatus according to an embodiment of the present application.
FIG. 4 is a schematic diagram of a second state of the second anti-lock brake apparatus according to an embodiment of the present application.
FIG. 5 is a schematic diagram of a first state of a third anti-lock brake apparatus according to an embodiment of the present application.
FIG. 6 is a schematic diagram of a second state of the third anti-lock brake apparatus according to an embodiment of the present application.
FIG. 7 is a schematic diagram of a first state of a fourth anti-lock brake apparatus according to an embodiment of the present application.
FIG. 8 is a schematic diagram of a second state of the fourth anti-lock brake apparatus according to an embodiment of the present application.
FIG. 9 is a schematic diagram of a first state of a fifth anti-lock brake apparatus according to an embodiment of the present application.
FIG. 10 is a schematic diagram of a second state of the fifth anti-lock brake apparatus according to an embodiment of the present application.
FIG. 11 is a schematic perspective structural diagram of an anti-lock brake apparatus according to an embodiment of the present application.
FIG. 12 is a schematic exploded structural diagram of an anti-lock brake apparatus according to an embodiment of the present application.
FIG. 13 is a schematic sectional diagram of an anti-lock brake apparatus according to an embodiment of the present application.
FIG. 14 is a schematic local sectional structural diagram of an anti-lock brake apparatus according to an embodiment of the present application.
FIG. 15 is a schematic perspective sectional diagram of a volume-adjusting part of an anti-lock brake apparatus according to an embodiment of the present application.
FIG. 16 is a schematic diagram of a frictional force exerted on a wheel by an existing anti-lock brake apparatus.
FIG. 17 is a schematic diagram of a frictional force exerted on a wheel by an anti-lock brake apparatus of the present application.

### Description of reference numerals:

10, first oil pump part; 11, oil pump piston; 12, oil pump shell; 121, first exit; 13, first oil-transmission pipeline; 20, volume-adjusting part; 21, volume-adjusting shell; 211, first through hole; 212, second through hole; 213, volume chamber; 213a, second diameter section; 213b, first diameter section; 214, adjusting member shell; 2141, first anti-rotation surface; 215, adjusting unit shell; 2151, motor shell; 2152, end cap; 22, adjusting member; 221, rotating block; 222, baffle; 223, second anti-rotation surface; 231, power apparatus; 232, transmission screw rod; 233, first transmission wheel; 234, transmission connecting rod; 235, second transmission wheel; 236, transmission cam; 237, connecting shaft; 238, output shaft; 2381, first shaft section; 2381a, second protrusion; 2381b, first protrusion; 2382, second shaft section; 2383, third shaft section; 241, controller; 242, wheel speed sensor; 25, oil pipeline screw; 251, oil outlet screw; 26, throttle structure; 27, data transmission pipeline; 30, second oil pump part; 31, oil pump; 32, second oil-transmission pipeline; 40, fastener; 51, thrust bearing; 52, sealing ring; 53, limiting structure; 60, brake trigger; 70, wheel; 71, disk.

### DESCRIPTION OF EMBODIMENTS

In order to make those of ordinary skills in the art better understand the solution of the present application, the technical solution of the embodiments of the present application will be clearly and completely described below with reference to the drawings in the embodiments of the present application. Obviously, the described embodiments are part of embodiments of the present application, but not all of the embodiments. Based on the embodiments of the present application, all other embodiments obtained by those of ordinary skills in the art without creative efforts are within the scope of the present application.

For convenience of description and understanding, before illustrating a structure of an anti-lock brake apparatus of a brake system, a certain application scenario will be taken as an example, to briefly illustrate the brake system as follows.

The brake system includes a brake oil pipeline. For example, the brake oil pipeline can be connected to a brake oil pump, the brake oil pump is connected to a caliper, and the caliper is used to be connected with a wheel. The brake oil pump controls a frictional force exerted on the wheel by the caliper according to an inputted oil pressure, to realize brake or release of the wheel.

For example, the brake system is applied to an electric-assisted vehicle, and the electric-assisted vehicle includes a brake and wheels. The brake oil pump is connected to the brake through the brake oil pipeline, and the caliper is connected with a wheel. When braking needs to be performed, a user triggers the brake through any suitable manners such as pressing, pulling, trampling, etc., and the brake moves so as to enable the oil pressure in the brake oil pump to increase, and thus a frictional force exerted on the wheel by the caliper to increase (when the braking does not need to be performed, the caliper does not exert the frictional force on the wheel) to reduce a wheel speed of the wheel. When the user stops trigging the brake (for example, the brake is released), the oil pressure in the brake oil pump is reduced, to release the caliper, and the frictional force exerted on the wheel is 0, and then the wheel can normally rotate.

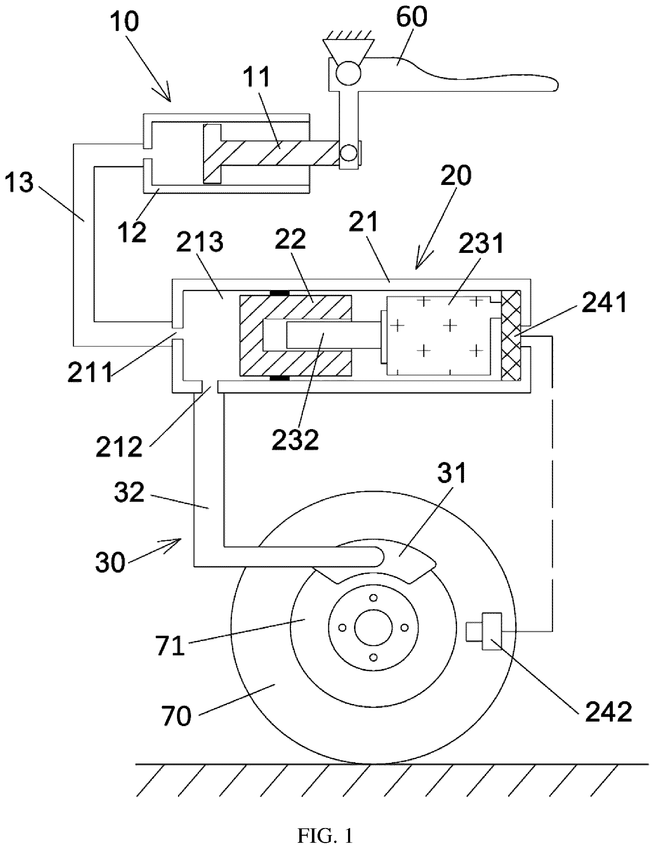

In such a braking process, to prevent the wheel from being locked due to excessive oil pressure of the brake oil pump, resulting in sliding of the electric-assisted vehicle, and thus leading to unsafety of the driving, as shown in FIG. 1 to FIG. 15, embodiments of the present application provide an anti-lock brake apparatus, applied to a brake system, the brake system being used to provide a brake frictional force for a wheel 70, and the brake system including a brake oil pipeline, where the anti-lock brake apparatus includes: a volume-adjusting part 20, where the volume-adjusting part 20 has a volume chamber 213, the volume chamber 213 is connected into the brake oil pipeline, a volume of the volume chamber 213 is continuously adjustable, the volume-adjusting part 20 adjusts the volume of the volume chamber 213 according to a state parameter of the wheel 70, to enable an oil pressure in the brake oil pipeline to vary, and the brake frictional force exerted on the wheel 70 by the brake system is continuously adjustable.

In one example, brake oil may exist in the brake oil pipeline of the brake system, different oil pressure of the brake oil lead to different frictional force output to the wheel 70. In the present embodiment, the volume chamber 213 of the volume-adjusting part 20 of the anti-lock brake apparatus is connected into the brake oil pipeline, and in this way, the brake oil in the brake oil pipeline will enter the volume chamber 213. Since the volume of the volume chamber 213 is continuously adjustable, the oil pressure in the brake oil pipeline will vary correspondingly as the volume of the volume chamber 213 varies, so as to make the frictional force exerted on the wheel 70 by the brake system varies.

In the present embodiment, the volume variation of the volume chamber 213 of the volume-adjusting part 20 is adjusted based on a state parameter (e.g. wheel speed) of the wheel 70, and the state parameter may be used to indicate whether the wheel 70 will lock, by which the function of anti-locking is realized. For example, when the state parameter indicates that the wheel 70 may be locked, the volume of the volume chamber 213 may increase, so as to reduce the oil pressure in the brake oil pipeline, to reduce the frictional force exerted on the wheel 70, preventing locking.

In the following, the structure and working process of the anti-lock brake apparatus will be described in detail with reference to a specific example.

It shall be understood that, the anti-lock brake apparatus may cooperate with a brake system having other structure, and is not limited to the brake system exemplified in the present application scenario.

In an embodiment, the brake system of the present application scenario includes a first oil pump part 10 and a second oil pump part 30, where the first oil pump part 10 is used to be connected to a brake trigger 60 (such as a brake), and to output or retrieve brake fluid under drive of the brake trigger member 60; and the second oil pump part 30 is used to be connected to the wheel 70, so as to provide the brake frictional force for the wheel 70. The first oil pump part 10 and the second oil pump part 30 are connected through a pipeline, where the pipeline can be considered as the brake oil pipeline of the brake system.

In another embodiment, the brake system of the present application scenario only includes the second oil pump part. The brake trigger 60 (such as a brake) is connected to the volume-adjusting part 20 through an electric signal. When braking, the brake trigger 60 triggers a brake signal to be transmitted to the volume-adjusting part 20, the volume-adjusting part 20 controls the adjusting member 22 to move according to the brake signal, to increase the oil pressure in the brake oil pump 31 in the second oil pump part 30, so as to increase the frictional force on the wheel 70.

In the case where the brake system includes the first oil pump part 10 and the second oil pump part 20, as shown in the example in FIG. 1, the first oil pump part 10 includes an oil pump piston 11, an oil pump shell 12 and a first oil-transmission pipeline 13. The oil pump shell 12 has a first exit 121, the first oil-transmission pipeline 13 is connected to an oil chamber of the oil pump shell 12 through the first exit 121. The oil pump piston 11 is provided within the oil pump shell 12, and is connected to the brake trigger 60, the brake trigger 60 is rotatably fixed on the vehicle, and is hinged with the oil pump piston 11.

The second oil pump part 30 includes the brake oil pump 31, a caliper and a second oil-transmission pipeline 32, the brake oil pump 31 is connected with the caliper, and the caliper matches with the wheel 70. If the oil pressure of the brake oil pump 31 increases, the caliper clamps the wheel 70 to exert the frictional force thereon to decelerate the wheel 70.

When braking normally occur, a user operates the brake trigger 60, and the brake trigger 60 rotates to push the oil pump piston 11 to move, for example, the oil pump piston 11 moves towards left in FIG. 1 during braking, so as to drain the brake fluid. The brake fluid enters the brake oil pump 31 to increase the oil pressure therein, and the caliper clamps to brake the wheel 70.

To solve the problem of wheel-locking mentioned above, an existing anti-lock brake apparatus is added in the brake system. Working principle of the existing anti-lock brake apparatus will be briefly described as follows.

The existing anti-lock brake apparatus includes a solenoid valve, a high-pressure chamber, a low-pressure chamber, a caliper and a wheel speed sensor. The high-pressure chamber is used to transmit brake oil to the oil pump connected with the caliper of the wheel, to enable the caliper exert the frictional force on the wheel, and the low-pressure chamber may retrieve the oil.

The wheel speed sensor detects a rotation speed of the wheel, the solenoid valve controls connection between the oil pump of the caliper and the high-pressure chamber or the low-pressure chamber according to the rotation speed of the wheel, so as to adjust the oil pressure of the oil pump of the caliper, and thus to adjust the frictional force exerted on the wheel. By rapidly switching the connections between the oil pump of the caliper and the high-pressure and low-pressure chambers (similar to a dotted braking process), the solenoid valve prevents the wheel from being locked.

Such an anti-lock brake apparatus needs to use two or more solenoid valves, which leads to a complex overall structure and high cost. In addition, when the low-pressure chamber of the anti-lock brake apparatus is connected to the oil pump of the caliper, no frictional force will be exerted on the wheel 70, which will cause reduced brake efficiency and long brake distance, and thus is disadvantageous to driving safety.

When the anti-lock brake apparatus of the present application is connected in the brake system, the volume chamber 213 of the volume-adjusting part 20 is connected into the brake oil pipeline. Since the volume of the volume chamber 213 is continuously adjustable, for example, the volume of the volume chamber 213 may be adjusted according to the state parameter (such as wheel speed) of the wheel 70, and as the volume of the volume chamber 213 varies, a volume of the brake fluid output into the second oil pump part 30 varies, so as to enable the frictional force output to the wheel 70 by the second oil pump part 30 to vary without being reduced to 0. In such a way, it is realized that the wheel 70 is prevented from being directly locked in the case where it is ensured that the speed of the wheel 70 can be reduced, which ensures that the sliding rate of the wheel is in a desirous range, and then driving safety of the vehicle is guaranteed.

The volume of the volume chamber 213 can be linearly adjusted or non-linearly adjusted, without needing multiple solenoid valves, thus it is made that the structure is simpler, the cost is lower, and the reliability is better.

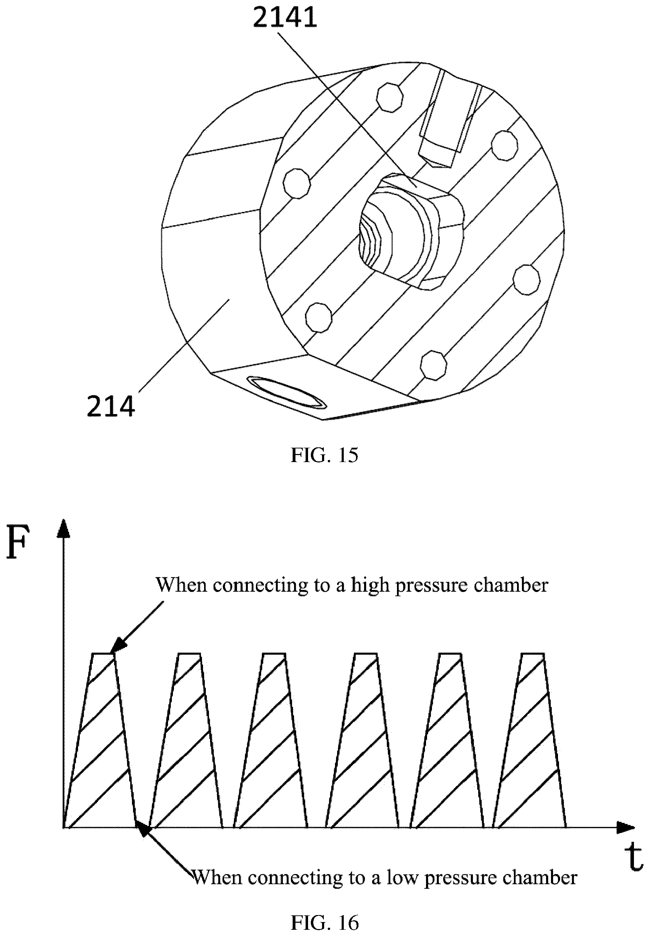

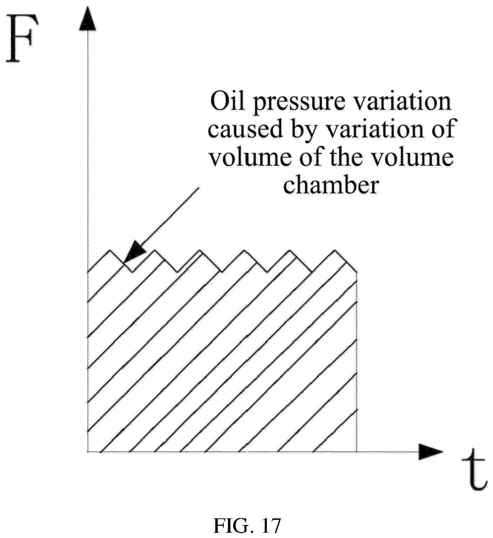

In general, compared with the anti-lock manner that uses switch-type solenoid valve and provides only two kinds of frictional forces (one is higher frictional force when the high-pressure chamber is connected, and the other is no frictional force when the low-pressure chamber is connected), the anti-lock manner of the present application may provide a continuous and adjustable frictional force, and thus enables the brake distance to be shorter, which is beneficial to improving driving safety of the vehicle. This can also be seen from the comparison between FIG. 16 and FIG. 17.

Specifically, FIG. 16 shows a schematic diagram of a frictional force exerted on a wheel when an existing anti-lock brake apparatus is used for braking, and FIG. 17 shows a schematic diagram of a frictional force exerted on a wheel when the anti-lock brake apparatus of the present application is used for braking. It can be clearly seen from FIG. 16 and FIG. 17 that in the case of having the same mass and speed, the frictional force of the anti-lock brake apparatus of the present application is always constant in a macroscopic view (it will vibrate slightly up and down around f, but there will be no process of falling to 0), while the frictional force of the traditional switch-type anti-lock brake apparatus repeatedly jumps between f and 0, and it has a process of falling to 0, so when braking from the same speed v to 0, the anti-lock brake apparatus in the present embodiment requires a shorter braking time, and average speeds from the speed v to 0 are the same. The braking time of the present application is shorter, so the braking distance is shorter and the driving safety is higher.

In the present embodiment, the volume-adjusting part 20 includes a volume-adjusting shell 21, an adjusting member 22 and an adjusting unit.

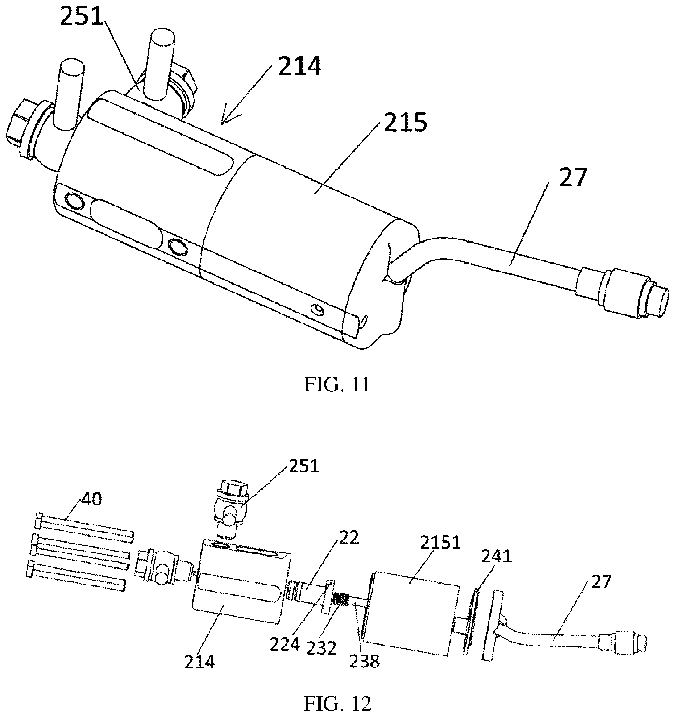

The volume-adjusting shell 21 surrounds to form an inner chamber, and the volume-adjusting shell 21 is provided with a first through hole 211 and a second through hole 212 at an interval. The structure, shape, material, etc., of the volume-adjusting shell 21 can be determined according to needs, as long as it can accommodate the brake fluid, without limitation. In an embodiment, as shown in FIG. 11, the volume-adjusting shell 21 includes an adjusting member shell 214 for accommodating the adjusting member 22, and an adjusting unit shell 215 for accommodating the adjusting unit. The adjusting unit shell 215 can be fixedly connected with the adjusting member shell 214 through such as fastener 40, so as to realize reliable installation and fixing of the adjusting unit. Such a connecting manner between the adjusting unit shell 215 and the adjusting member shell 214 makes the structure of the anti-lock brake apparatus more compact and smaller in volume.

The adjusting member 22 is slidably provided in the inner chamber, and the adjusting member 22 divides the inner chamber into at least two independent chambers, where one chamber is the volume chamber 213 and is between the adjusting member 22 and the first through hole 211 (also referred to as a first entrance), both the first through hole 211 and the second through hole 212 are communicated with the volume chamber 213, the volume chamber 213 is connected into the brake oil pipeline through the first through hole 211 and the second through hole 212. It should be noted that the sliding of the adjusting member 22 in the present embodiment is not limited to linear movement or non-linear movement, but may also include rotation.

In one embodiment, both the first through hole 211 and the second through hole 212 can be provided with an oil pipeline screw 25. The oil pipeline screw 25 connected to the first through hole 211 is referred to as an oil inlet screw, and the oil pipeline screw 25 connected to the second through hole 212 is referred to as an oil outlet screw 251 (as shown in FIG. 11 to FIG. 14). Certainly, the oil pipeline screw 25 can also be provided only in the first through hole 211 or the second through hole 212. There is no limitation on this in the present application.

In one embodiment, the first through hole 211 is connected to the first oil pump part 10 through the oil pipeline screw 25, and the second through hole 212 is connected to the second oil pump part 30 through the oil pipeline screw 25. During braking, movement of the brake 60 drives the oil pump piston 11 of the first oil pump part 10 to move, so as to output brake oil to the volume chamber 213, and the brake oil enters the second oil pump part 30 through the volume chamber 213, so as to increase the oil pressure of the brake oil pump 31. A process of releasing the brake is reversed, and will not be repeated here. It shall be noted that a space on the right of the adjusting member 22 in the volume-adjusting shell 21 does not affect the oil pressure of the brake oil pump 31. For example, the space can communicate with the atmosphere, that is, the pressure of the space is equal to 1 standard atmospheric pressure.

In the present embodiment, in order to avoid adverse effect on anti-locking during the anti-locking process due to operations on the brake 60 by the user, a throttle structure 26 is provided in the oil pipeline screw 25 connected to the first through hole 212. The throttle structure 26 includes a valve rod and a valve sleeve, where the valve sleeve is provided in the oil pipeline screw 25, and the valve rod is movable relative to the valve sleeve. In a first state, the valve rod is in contact with the adjusting member 22, and is limited by the adjusting member 22. A channel exists between the valve rod and the valve sleeve, the channel allows the brake oil to pass through, so that pressing and releasing of the brake 60 may obviously influence the oil pressure in the volume chamber 213, thereby adjusting the frictional force outputted by the brake system.

In a second state, the adjusting member 22 gradually moves away from the valve rod due to the anti-lock adjustment, and when the adjusting member 22 and the valve rod are out of contact, the valve rod abuts against the valve sleeve, so that an area of the channel therebetween allowing the brake oil to pass through is reduced, and the damping for the brake oil to pass through is increased, and the pressing or releasing of the brake 60 has a reduced influence on the oil pressure change in the volume chamber 213, so that the frictional force outputted by the brake system is controlled by the volume of the volume chamber 213.

Since the throttle structure 26 is arranged in the oil pipeline screw 25 that is an inevitable exist, it does not need to occupy additional space, and thus the anti-lock brake apparatus has a short lateral length and small occupied volume.

As shown in FIG. 1, the adjusting member 22 may be a piston block that is movable in the volume-adjusting shell 21, or a rotating block that is rotatable in the volume-adjusting shell 21, as long as it can separate the volume chamber 213 out of the volume-adjusting shell 21 and adjust its volume.

The adjusting unit is connected with the adjusting member 22, and is used for adjusting a position of the adjusting member 22 according to a state parameter of the wheel 70, thereby adjusting the volume of the volume chamber 213 connected into the brake oil pipeline.

In an example, the adjusting unit is connected to an end of the adjusting member 22 far from the first through hole 211. The adjusting unit may include a drive component and a control component. The drive component and the adjusting member 22 are connected, to provide power for the adjusting member 22 to slide. The control component is connected to the drive component, the control component controls the drive component to drive the adjusting member 22 to approach or move away from the first through hole 211 according to the state parameter of the wheel, thereby adjusting the volume of the volume chamber 213 connected into the brake oil pipeline. In such a way, the adjusting member 22 can be controlled accurately and immediately.

Optionally, the control component includes a controller 241. The controller 241 is connected with the drive component, the controller 241 is used to receive state information of the wheel from a wheel speed sensor 242, and the state information includes a wheel speed. The controller 241 may control the drive component based on the wheel speed. The controller 241 can be any suitable chip or processor with computing capability, without limitation here.

The drive component is connected with the control component and the adjusting member 22, respectively, and the control component controls the drive component to move according to the wheel speed so as to drive the adjusting member 22 to move. The drive component mainly provides power for the adjusting member 22, and acts according to a control signal provided by the control component, so as to drive the adjusting member 22 to move.

In a case, in order to make the structure compact and the volume small, the drive component includes a power apparatus 231, the power apparatus 231 is electrically connected with the control component. An output shaft of the power apparatus 231 is connected with the adjusting member 22, and the control component controls a rotation direction and a rotation speed of the power apparatus 231 according to the wheel speed, so as to drive the adjusting member 22 to approach or move away from the first through hole 211.

The power apparatus 231 may be a motor, and in this way, production cost can be reduced. Certainly, in other embodiments, the power apparatus 231 may also be other structure that can provide power, without limitation on this.

Optionally, the drive component further includes a reducer, and the reducer is connected between the output shaft of the power apparatus and the adjusting member 22. As the motor rotates at a high speed, in order to meet a speed requirement for adjustment, the reducer is connected to the output shaft of the motor, and the power is outputted from output shaft of the reducer to the adjusting member 22, so that the speed reduction and torque increase can be realized. Alternatively, the drive component may not be provided with the reducer, without limitation on this. The reducer may include a plurality of reduction gears, and the reduction gears cooperate to reduce the outputted rotation speed.

In the present embodiment, the drive component further includes a transmission mechanism, where the transmission mechanism is connected between the power apparatus 231 and the adjusting member 22 to transmit power. The power outputted by the power apparatus 231 drives the transmission mechanism to move, and to drive the adjusting member 22 to approach or move away from the first through hole 211. In this way, the power apparatus 231 provides power, and the transmission mechanism transmits power. On the one hand, this is convenient for control, and has high reliability and low cost. On the other hand, this may allow the power apparatus 231 to have a compact structure, so the occupied space and the overall volume can be reduced.

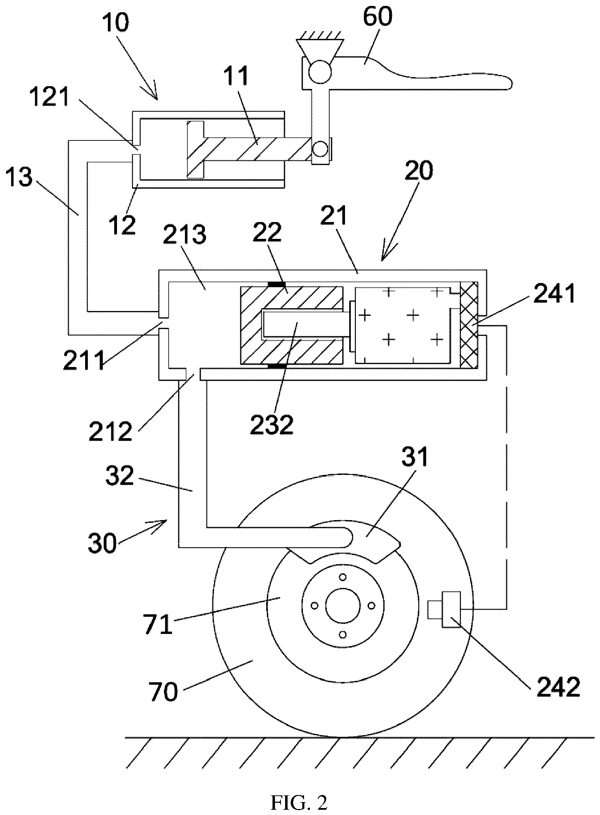

Different transmission mechanisms can be adopted according to different requirements. For example, in the example shown in FIG. 1 and FIG. 2, the adjusting member 22 can be a block with a threaded hole, and is movably provided in the volume-adjusting shell 21.

Optionally, in order to ensure the sealing performance of the volume chamber 213, a sealing structure is sleeved on an outer circumference of the adjusting member 22. The sealing structure is, for example, a sealing ring, a sealing sleeve, etc., to prevent leakage of the brake fluid.

The transmission mechanism includes a transmission screw rod 232, which is connected to the output shaft 238 of the power apparatus, and drives the adjusting member to move back and forth in the volume-adjusting shell 21. The transmission screw rod 232 is in threaded connection with the adjusting member 22, so that when the power apparatus 231 rotates, the transmission screw rod 232 can be driven to rotate, so as to push the adjusting member 22 to move, thereby adjusting the volume of the volume chamber 213.

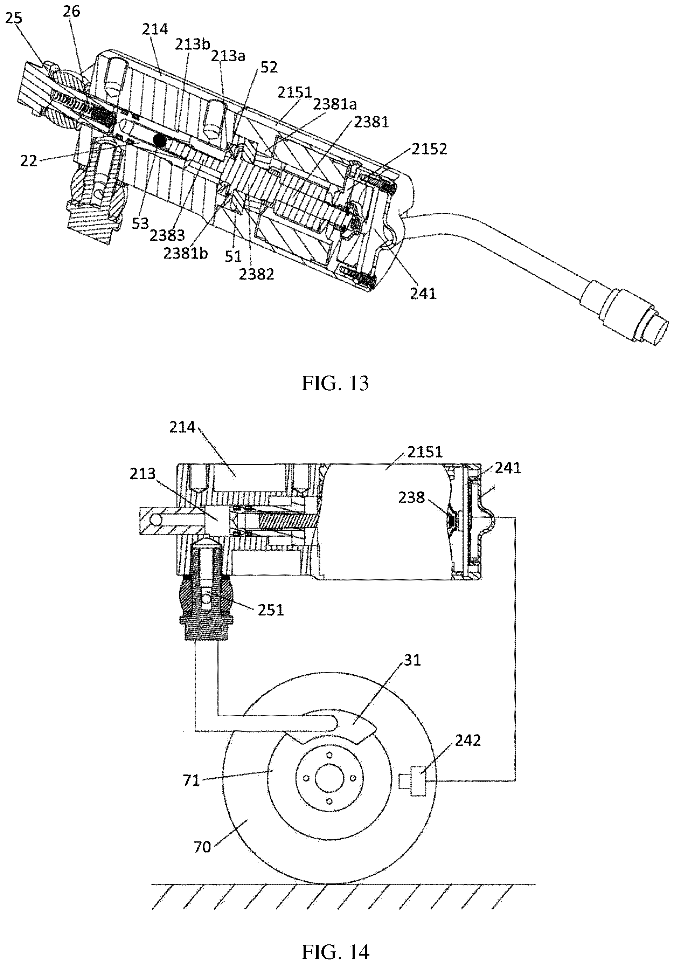

As shown in FIG. 12, when the power apparatus 231 is the motor, the adjusting unit shell 215 includes a motor shell 2151, which is used to accommodate the motor. As shown in FIG. 13, a stator is fixedly connected to the motor shell 2151. A rotation component is fixedly connected to the output shaft 238 of the motor, the rotation component includes a silicon steel sheet and a magnetic steel, and the magnetic steel is provided on the silicon steel sheet. An end cap 2152 is also provided in the motor shell 2151, and the end cap 2152 is used to support and limit the output shaft 238.

In the present embodiment, as shown in FIG. 13, in order to improve reliability, the output shaft 238 includes a first shaft section 2381, a second shaft section 2382 and a third shaft section 2383, which are sequentially connected along an axial direction, one end of the first shaft section 2381 far away from the second shaft section 2382 is connected with a rotation component, a bearing component is sleeved on the second shaft section 2382, and at least part of the third shaft section 2383 extends into the adjusting member 22. In this way, respective shaft sections and diameters of different positions of respective shaft sections can be determined as required.

As the output shaft 238 may be subjected to an axial force generated by the oil pressure of the brake oil in the volume chamber 213 and other possible axial forces during operation, the bearing component can not only support the output shaft 238, but also bear the axial force, thereby preventing the reliability and service life of the output shaft 238 from being reduced due to the axial force.

In the present embodiment, a first protrusion 2381b is provided on the second shaft section 2382, the first protrusion 2381b protrudes outward along a radial direction of the second shaft section 2382, a second protrusion 2381a is provided on an inner wall of the motor shell 2151, the second protrusion 2381a protrudes towards the second shaft section 2382, and the bearing component is provided between the first protrusion 2381b and the second protrusion 2381a. The first protrusion 2381b and the second protrusion 2381a can reliably limit the bearing component.

The bearing component includes a thrust bearing 51 for bearing an axial force exerted on the output shaft 238. The thrust bearing 51 can bear the axial force, thereby improving the reliability and service life of the output shaft 238.

On a side of the thrust bearing 51 far away from the screw rod, a deep groove ball bearing is provided to support the output shaft 238.

Optionally, an inner hole of the adjusting member shell 214 is a stepped hole, the stepped hole includes a first diameter section 213b and a second diameter section 213a, a diameter of the second diameter section 213a is greater than a diameter of the first diameter section 213b, at least part of a sealing ring 52 is provided in the second diameter section 213a, that is, the sealing ring 52is abutted between an outer circumferential surface of the second shaft section 2382 and an inner wall surface of the volume-adjusting shell 21, and at least part of the adjusting member 22 is provided in the first diameter section 213b. By providing the sealing ring 52, the components in the adjusting member shell 214 can be protected, improving safety.

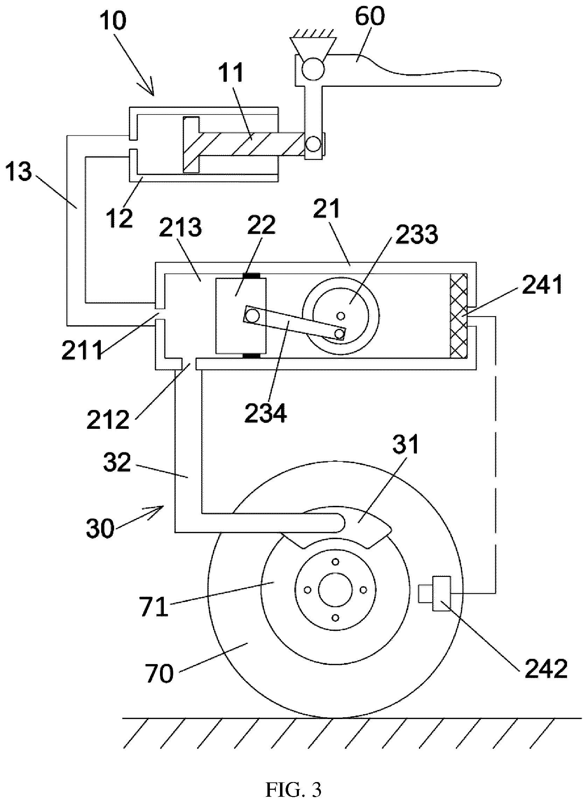

Optionally, a limiting structure 53 is provided in the adjusting member 22. When the adjusting member 22 moves to the first state, the limiting structure contacts with the output shaft 238 to prevent the adjusting member 22 from further moving in a first direction relative to the output shaft 238. In this way, when the adjusting member 22 moves to a rightmost position (i.e., in the first state) in FIG. 3, the adjusting member 22 is limited by the contact between the limiting structure 53 and the output shaft 238, to prevent the adjusting member 22 from continuing moving toward the right side (i.e., in the first direction) in FIG. 3, so that there is no need for a right end face of the adjusting member 22 to be in contact with an end face of the second shaft section of the output shaft to perform limiting, thus preventing a problem that the adjusting member 22 cannot move toward an opposite direction when the output shaft 238 rotates reversely due to excessive frictional force caused by a large contact area.

The limiting structure 53 may be a limiting ball, a limiting block and other structures that is movable in the adjusting member 22, or a protrusion provided on the adjusting member 22 as long as it can be matched with the output shaft 238.

Optionally, in order to ensure that the adjuster 22 can move reliably and accurately and will not be driven by the output shaft 238 to move, the inner wall surface of the adjusting member shell 214 is provided with a first anti-rotation surface 2141, an outer circumferential surface of the adjusting member 22 is provided with a second anti-rotation surface 223 cooperated with the first anti-rotation surface 2141. Cooperation between the first anti-rotation surface 2141 and the second anti-rotation surface 223 may prevent the adjusting member 22 from rotating, thereby ensuring the accuracy of a moving distance of the adjusting member 22 and thus ensuring a more accurate adjustment of the frictional force.

Optionally, a distance from at least one position in a cross section of the adjusting member shell 214 corresponding to the first anti-rotation surface 2141 to an axis of the transmission screw rod 232 is smaller than a radius of a maximum circumference when a part of the adjusting member 22 provided with the second anti-rotation surface 223 rotates around the axis of the transmission screw rod 232. This is ensured that, when the adjusting member 22 tends to rotate under drive of the output shaft 238, since the distance from the first anti-rotation surface 2141 to the axis of the transmission screw rod 232 is not enough to make the adjusting member 22 rotate over, a stop is formed for the adjusting member 22, thereby realizing an effect of preventing the adjusting member 22 from rotating.

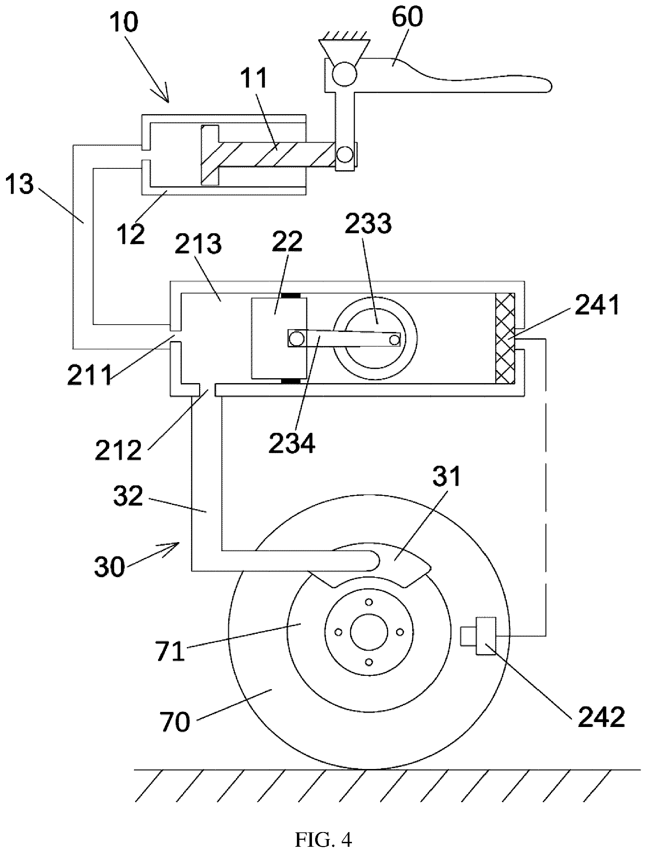

In another embodiment, as shown in FIG. 3 and FIG. 4, the transmission mechanism includes a first transmission wheel 233 and a transmission connecting rod 234. The first transmission wheel 233 is connected to the output shaft of the power apparatus 231, and is driven by the power apparatus 231 to rotate. A first end of the transmission connecting rod 234 is eccentrically hinged to the first transmission wheel 233, a second end of the transmission connecting rod 234 is hinged to the adjusting member 22. In this way, when the power apparatus 231 drives the first transmission wheel 233 to rotate, since the transmission connecting rod 234 is eccentrically hinged, the first end of the transmission connecting rod 234 is driven, and thus the second end of the transmission connecting rod 234 is driven to move, thereby pushing the adjusting member 22 to move.

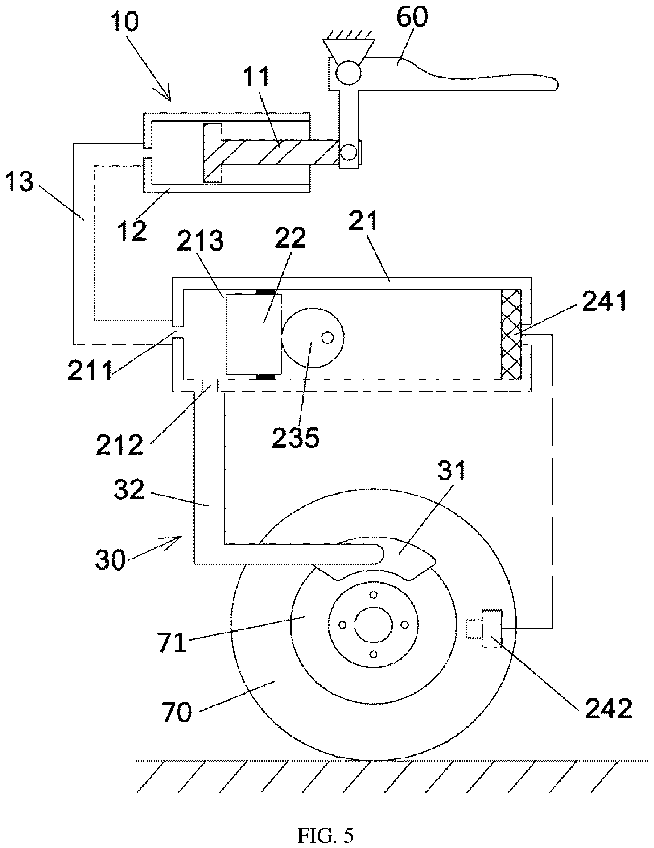

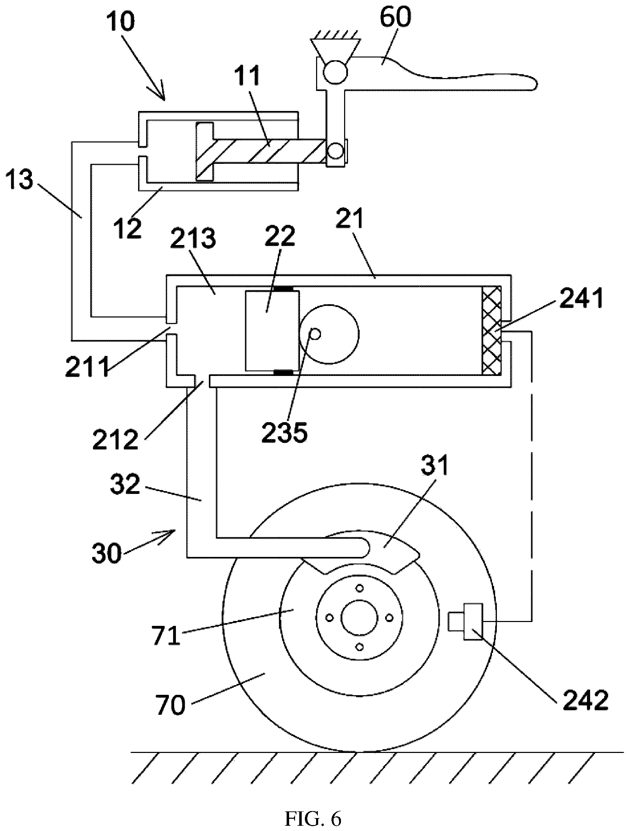

In another embodiment, as shown in FIG. 5 and FIG. 6, the transmission mechanism includes a second transmission wheel 235, the second transmission wheel 235 is eccentrically and rotatably provided in the volume-adjusting shell 21, and a part of an outer edge of the second transmission wheel 235 is in contact with the adjusting member 22 and pushes the adjusting member 22 to move. Since a rotation axis of the second transmission wheel 235 is different from a circle center of the second transmission wheel 235, and the rotation axis is connected with the power apparatus 231, so that when the power apparatus 231 drives the second transmission wheel 235 to rotate around the rotation axis, distances from parts of the outer edge of the second transmission wheel 235 in contact with the adjusting member 22 to the rotation axis are different, and thus the adjusting member 22 also moves under the action of oil pressure in the volume chamber 213.

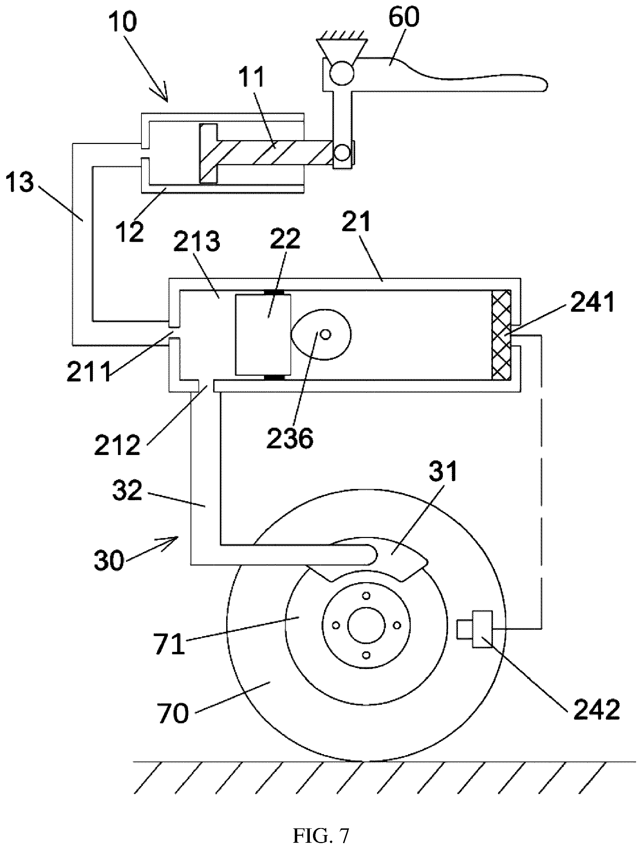

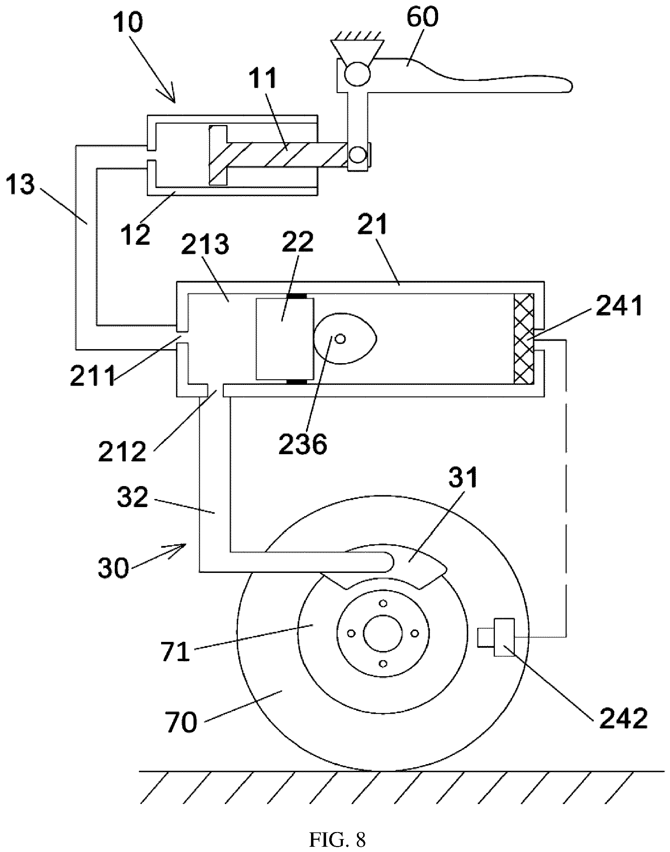

In another embodiment, as shown in FIG. 7 and FIG. 8, the transmission mechanism includes a transmission cam 236, a part of an outer edge of the transmission cam 236 is in contact with the adjusting member 22, and pushes the adjusting member 22 to move. Since distances between parts of the outer edge of the transmission cam 236 and the rotation axis may be different, when the power apparatus 231 drives the transmission cam 236 to rotate around the rotation axis, the parts of the outer edge of the transmission cam 236 in contact with the adjusting member 22 are different, and thus distances between the adjusting member 22 and the rotation axis are also different, so as to move the adjusting member 22, thereby adjusting the volume of the volume chamber 213.

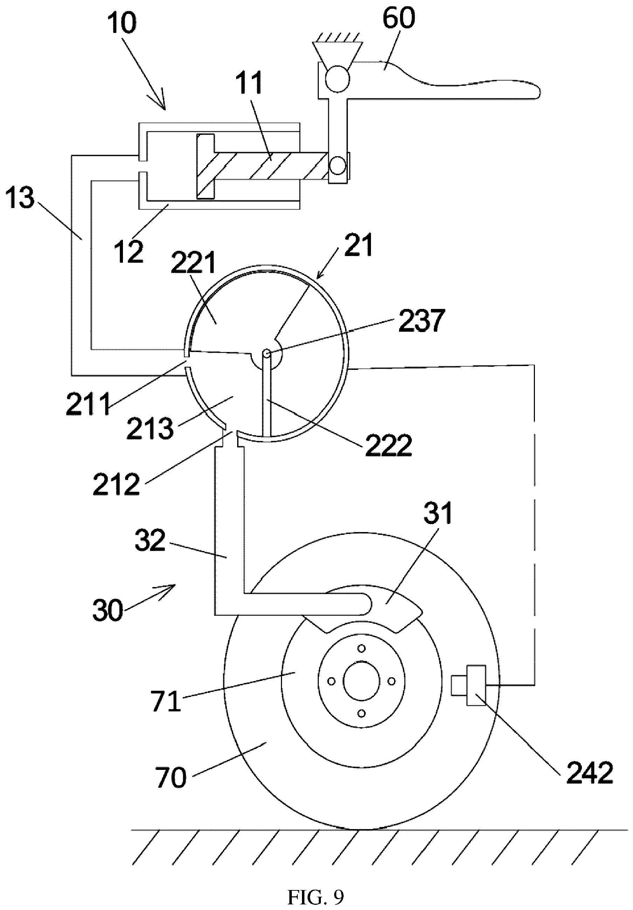

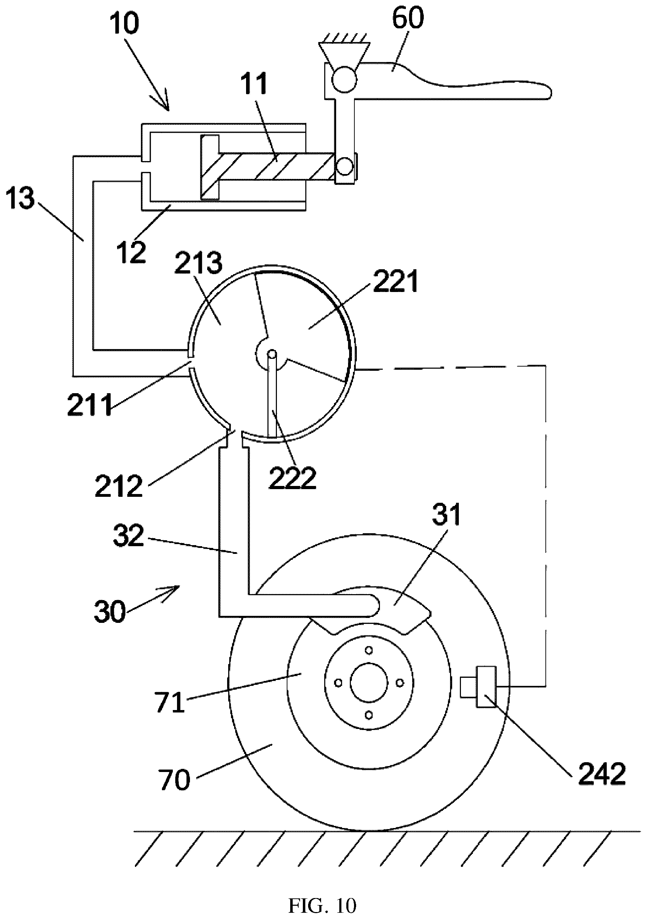

In another embodiment, as shown in FIG. 9 and FIG. 10, the adjusting member 22 includes a rotating block 221 and a baffle 222, the rotating block 221 is hinged to a first end of the baffle 222 through a connecting shaft 237, a second end of the baffle 222 abuts against the inner wall of the volume-adjusting shell 21, the rotating block 221 is rotatably provided in the volume-adjusting shell 21, and the rotating block 221 and the baffle 222 divide the volume-adjusting shell 21 into two independent chambers, where one chamber communicated with the first through hole 211 in the two chambers is the volume chamber 213. The adjusting member 22 with this structure can also realize the function of adjusting the volume chamber 213.

In order to adapt to the adjusting member 22, the transmission mechanism includes a connecting shaft 237, and the power apparatus 231 drives the connecting shaft 237 to rotate, so as to drive the rotating block 221 to rotate, thereby adjusting the volume of the volume chamber 213. This structure is simpler, so it has higher reliability and smaller volume.

To sum up, regardless of the structures of the adjusting member 22 and the drive component, it is only necessary to ensure that the adjusting member 22 can be driven to move based on the control signal of the control component, and thus can adjust the volume of the volume chamber 213. The working process will be described with reference to FIG. 1 and FIG. 2 in the following.

When a user uses a vehicle with such a apparatus, if braking is needed, then the brake trigger 60 can be triggered. The brake trigger 60 rotates to enable the oil pump piston 11 to move toward left in FIG. 1, so that the brake fluid in the oil pump shell 12 flows outwards, and enters the volume chamber 213 through the first oil-transmission pipeline 13.

Since the brake fluid in the volume chamber 213 increases, the oil pressure in the volume chamber 213, the second oil-transmission pipeline 32 and the oil pump 31 increases, so that the caliper connected to the oil pump 31 clamps the disk 71 on the wheel 70, to prevent the wheel from rotating.

During emergency braking, since the brake trigger 60 rotates by an excessive angle, the oil pressure increases more, which causes that the brake caliper clamps the disk 71 on the wheel 70 too tightly, and thus locking tends to occur, thereby causing the wheel 70 to slide. To prevent such situation, the wheel speed is detected through the wheel speed sensor 242, and the power apparatus is controlled by the controller 241 to rotate by a certain angle when the controller 241 determines according to the wheel speed that the wheel will be locked. In this way, the transmission mechanism is driven so as to drive the adjusting member 22 to move. For example, when locking occurs, the adjusting member 22 is driven to move right-ward in FIG. 1, so that the volume of the volume chamber 213 increases, which causes the oil pressure to reduce, and the frictional force of the brake caliper to reduce, but a certain frictional force is still remained, which realizes braking without locking. By adjusting the volume of the volume chamber 213, the pressure may be controlled continuously and adjustably, so that the wheel is in a state of being about to be locked but not locked, which can ensure that a continuous frictional force acts on the disk 71 in the whole braking process. This braking process has higher braking efficiency and shorter braking distance, compared with the prior art in which the frictional force on the disk sometimes exists and sometimes does not exist during the dotted braking process.

Optionally, in order to ensure that the anti-lock brake apparatus has better adaptability and reliability, a maximum volume of the oil pump shell 12 is smaller than a maximum adjustable volume of the volume chamber 213, thereby ensuring that during braking, even if the user presses the oil pump piston 11 to the bottom to fully discharged the brake fluid in the oil pump shell 12, the volume chamber 213 still has enough volume to perform anti-lock adjustment, thereby avoiding the situation where the volume chamber 213 cannot perform anti-lock adjustment due to excessive oil pressure and insufficient volume.

Optionally, in order to ensure the reliability of anti-lock adjustment, the moving speed of the adjusting member 22 driven by the power apparatus 231 of the volume-adjusting part 20 can be greater than the moving speed of the oil pump piston 11, which may ensure a timely response during anti-lock adjustment, and even if the user continues to press the brake trigger 60 to further increase the oil pressure during the adjustment process, the anti-lock can still be realized, thereby improving the reliability.

It should be noted that the aforementioned brake fluid may be fluid capable of providing oil pressure, such as brake oil.

In another aspect of the present application, there is provided a vehicle, which includes a wheel 70, a brake trigger 60, a brake system and the above anti-lock brake apparatus, the brake oil pipeline of the anti-lock brake apparatus and the brake system is connected to the brake trigger 60 and the wheel 70, respectively, and the volume chamber 213 of the anti-lock brake apparatus is connected into the brake oil pipeline, so that a continuous and adjustable frictional force is provided for the wheel 70 under control of the brake trigger 60.

In the present embodiment, the brake trigger 60 includes a brake, and the user may trigger the braking by operating the brake in manners such as rotating or pressing, or the user can terminate or pause the braking in a manner of releasing the brake.

Optionally, to ensure accuracy of detection of the state parameter of the wheel 70, the vehicle includes a wheel speed sensor 242, the wheel speed sensor 242 is connected to a controller 241, the wheel speed sensor 242 is provided near the wheel 70, the wheel speed sensor 242 is used to detect the wheel speed of the wheel 70, and to send the wheel speed to the controller 241.

The wheel speed of the wheel 70 is accurately detected through the wheel speed sensor 242, and the controller 241 may accurately determine a real-time slide rate of the wheel 70 based on the wheel speed, and thus accurately determine whether the wheel 70 is in a state of being about to be locked, thereby ensuring accuracy and timeliness of the adjustment of the adjusting member 22, and thus ensuring driving safety, and it can be realized that the sliding rate of the wheel 70 is kept within a desirous range.

In the present embodiment, the sliding rate may be presented as: (vehicle speed-wheel speed)/vehicle speed. If the sliding rate is higher than a preset value (the preset value can be determined as required, e.g., it may be 0.7), it represents that the wheel 70 is in the state of being about to be locked. At this time, if not being handled, the wheel 70 will be locked and cause the vehicle to slide. In this state, the adjusting member 22 can be adjusted, so that the volume chamber 213 varies, to prevent locking.

Optionally, the controller 241 is connected to the wheel speed sensor 242 through a data transmission structure. The data transmission structure includes a data transmission line 27. The data transmission line 27 passes through an installation cap, and is used to be connected to the wheel speed sensor 242. The connection through the data transmission line 27 can improve stability and reliability of the data transmission.

Alternatively, the data transmission structure includes a wireless data transmitter. The wireless data transmitter may be WiFi, Bluetooth, etc. Through wireless data transmission between the controller and the wheel speed sensor 242, wiring is omitted, and thus installation and arrangement becomes more convenient. In another aspect of the present application, there is provided an electric-assisted vehicle, which includes wheels 70, a brake trigger 60, a brake system and the above anti-lock brake apparatus, where the brake oil pipeline of the anti-lock brake apparatus and the brake system is connected to the brake trigger 60 and the wheel 70, respectively, and the volume chamber 213 of the anti-lock brake apparatus is connected into the brake oil pipeline, so that a continuous and adjustable frictional force is provided to the wheel 70 under control of the brake trigger 60.

It shall be noted that, the frictional force provided to the wheel may be adjusted linearly or non-linearly, as long as it is ensured that the wheel 70 is not locked, and the frictional force is provided thereto when necessary.

The electric-assisted vehicle is configured with the above anti-lock brake apparatus, which can control the brake force by controlling the volume change of the volume chamber, so as to make the wheel stay in the state of being about to be locked but not locked until the vehicle is successfully braked. The anti-lock brake apparatus does not need a solenoid valve to switch between high pressure and low pressure, and thus has higher reliability, simpler structure, higher brake efficiency and shorter brake distance. In still another aspect of the present application, there is provided an electric vehicle, including wheels 70, a brake trigger 60, a brake system and the above anti-lock brake apparatus, the brake oil pipeline of the brake system is connected to the brake trigger 60 and the wheel 70, respectively, and the volume chamber 213 of the anti-lock brake apparatus is connected into the brake oil pipeline, so that a continuous and adjustable frictional force is provided to the wheel 70 under control of the brake trigger 60.

The electric vehicle may be an electric bicycle, etc.

It should be noted that in the description of the present application, the terms "first" and "second" are only used to describe different parts or names conveniently, and cannot be understood as indicating or implying the sequential relationship, relative importance or implicitly indicating the number of indicated technical features. Therefore, the features defined with "first" and "second" can include at least one the feature explicitly or implicitly.

Unless otherwise defined, all technical and scientific terms used herein have the same meanings as commonly understood by those skilled in the art of the present application. The terms used in the specification of the present application is only for the purpose of describing specific embodiments, and is not intended to limit the present application.

It should be noted that although the specific embodiments of the present application have been described in detail with reference to the drawings, they should not be construed as limiting the scope of protection of the present application. Within the scope described in the claims, various modifications and variations that can be made by those skilled in the art without creative efforts still belong to the scope of protection of the present application.

Examples of embodiments of the present application are intended to concisely describe the technical features of the embodiments of the present application, so that those skilled in the art can intuitively understand the technical features of the embodiments of the present application, and are not taken as improper limitations of the embodiments of the present application.

Finally, it should be noted that the above embodiments are only used to illustrate the technical solutions of the present application, but not to limit them. Although the present application has been described in detail with reference to the above embodiments, it should be understood by those skilled in the art that it is still possible to modify the technical solutions described in the above embodiments, or to equivalently replace some technical features therein. These modifications or replacements do not make the essence of the corresponding technical solutions deviate from the scope of the technical solutions of the embodiments of the present application.

## Claims

1. An anti-lock brake apparatus, applied to a brake system, the brake system being used to provide a brake frictional force for a wheel (70), the brake system comprising a brake oil pipeline, wherein the anti-lock brake apparatus comprises:
a volume-adjusting part (20), wherein the volume-adjusting part (20) has a volume chamber (213), the volume chamber (213) is connected into the brake oil pipeline, a volume of the volume chamber (213) is continuously adjustable, the volume-adjusting part (20) adjusts the volume of the volume chamber (213) according to a state parameter of the wheel (70), to enable an oil pressure in the brake oil pipeline to vary, and the brake frictional force exerted on the wheel (70) by the brake system to be adjustable;
wherein the volume-adjusting part (20) comprises:
a volume-adjusting shell (21), which surrounds to form an inner chamber, and is provided with a first through hole (211) and a second through hole (212) at an interval;
an adjusting member (22) , which comprises a rotating block (221) and a baffle (222), wherein the rotating block (221) is hinged to a first end of the baffle (222) through a connecting shaft (237), a second end of the baffle (222) abuts against an inner wall of the volume-adjusting shell (21), the rotating block (221) is rotatably provided in the volume-adjusting shell (21) , and the rotating block (221) and the baffle (222) divide the inner chamber into at least two independent chambers, wherein one chamber is the volume chamber (213) and is between the adjusting member (22) and the first through hole (211) of the volume-adjusting shell (21), both the first through hole (211) and the second through hole (212) of the volume-adjusting shell (21) are communicated with the volume chamber (213), the volume chamber (213) is connected into the brake oil pipeline through the first through hole (211) and the second through hole (212); and
an adjusting unit, which is connected to the adjusting member (22), and is configured to adjust a position of the adjusting member (22) according to the state parameter of the wheel (70), and thus to adjust a volume of the volume chamber (213) connected into the brake oil pipeline.

2. The anti-lock brake apparatus according to claim 1, wherein the adjusting unit comprises:
a drive component, which is connected to the adjusting member (22);
a control component, which is connected to the drive component, and controls the drive component to drive the rotating block (221) to rotate according to the state parameter of the wheel (70), and thus to adjust the volume of the volume chamber (213) connected into the brake oil pipeline.

3. The anti-lock brake apparatus according to claim 2, wherein the drive component comprises:
a power apparatus (231), which is electrically connected to the control component, wherein an output shaft (238) of the power apparatus (231) is connected to the adjusting member (22), the control component controls a rotation direction and a rotation speed of the power apparatus (231) according to the state parameter, so as to drive the rotating block (221) to rotate so as to adjust the volume of the volume chamber (213).

4. The anti-lock brake apparatus according to claim 3, wherein the drive component further comprises: a transmission mechanism, wherein the transmission mechanism is connected between the power apparatus (231) and the adjusting member (22), power outputted by the power apparatus (231) drives the transmission mechanism, to move the transmission mechanism, and to drive the rotating block (221) to rotate to adjust the volume of the volume chamber (213).

5. The anti-lock brake apparatus according to claim 3 or 4, wherein the drive component further comprises a reducer, the reducer is connected between the output shaft (238) of the power apparatus and the adjusting member (22).

6. The anti-lock brake apparatus according to claim 4 or 5, wherein the transmission mechanism comprises the connecting shaft (237), the power apparatus (231) drives the connecting shaft (237) to rotate, so as to drive the rotating block (221) to rotate, thereby adjusting the volume of the volume chamber (213).

7. The anti-lock brake apparatus according to claim 6, wherein the output shaft (238) comprises a first shaft section (2381), a second shaft section (2382) and a third shaft section (2383), which are sequentially connected along an axial direction, one end of the first shaft section (2381) far away from the second shaft section (2382) is connected with a rotation component, a bearing component is provided on the second shaft section (2382), and at least part of the third shaft section (2383) extends into the adjusting member (22).

8. The anti-lock brake apparatus according to claim 7, wherein a first protrusion (2381b) is provided on the second shaft section (2382), the first protrusion (2381b) protrudes outward along a radial direction of the second shaft section (2382), a second protrusion (2381a) is provided on the inner wall of the volume-adjusting shell (21), the second protrusion (2381a) protrudes towards the second shaft section (2382), and the bearing component is provided between the first protrusion (2381b) and the second protrusion (2381a).

9. The anti-lock brake apparatus according to claim 7 or 8, wherein one side of the second shaft section (2382) close to the adjusting member (22) is sleeved with a sealing ring (52), the sealing ring (52) is abutted between an outer circumferential surface of the second shaft section (2382) and the inner wall surface of the volume-adjusting shell (21).

10. The anti-lock brake apparatus according to claim 9, wherein an inner hole of the volume-adjusting shell (21) is a stepped hole, the stepped hole comprises a first diameter section (213b) and a second diameter section (213a), a diameter of the second diameter section (213a) is greater than a diameter of the first diameter section (213b), at least part of the sealing ring (52) is provided in the second diameter section (213a), and at least part of the adjusting member (22) is provided in the first diameter section (213b).

11. The anti-lock brake apparatus according to any one of claims 6-10, wherein a limiting structure (53) is provided within the adjusting member (22), and when the adjusting member (22) moves to a first state, the limiting structure (53) is in contact with the output shaft (238), to prevent the adjusting member (22) from further moving along a first direction relative to the output shaft (238).

12. The anti-lock brake apparatus according to any one of claims 6-11, wherein the inner wall surface of the volume-adjusting shell (21) is provided with a first anti-rotation surface (2141), and an outer circumferential surface of the adjusting member (22) is provided with a second anti-rotation surface (223) matched with the first anti-rotation surface (2141).

13. The anti-lock brake apparatus according to any one of claims 1-12, wherein an oil pipeline screw (25) is connected to the first through hole (211), and a throttle structure (26) is provided in the oil pipeline screw (25).

14. The anti-lock brake apparatus according to any one of claims 2-13, wherein the control component comprises:
a controller (241), the controller (241) is connected with the drive component, the controller (241) is configured to receive state information of the wheel (70), and the state information comprises a wheel speed.

15. A vehicle, comprising a wheel (70), a brake trigger (60), a brake system and the anti-lock brake apparatus according to any one of claims 1-14, wherein the brake oil pipeline of the brake system is connected to the brake trigger (60) and the wheel (70), respectively, and the volume chamber (213) of the anti-lock brake apparatus is connected into the brake oil pipeline, so that a continuous and adjustable frictional force is provided to the wheel (70) under control of the brake trigger (60).
